# EUROPÄISCHE PATENTSCHRIFT

(11) **EP 2 335 503 B1**
(45) Veröffentlichungstag und Bekanntmachung des Hinweises auf die Patenterteilung: **21.05.2014**
(21) Anmeldenummer: 10194748.9
(22) Anmeldetag: 13.12.2010
(51) Int. Cl.: A24C 5/32, A24C 5/47, A24D 3/02, B65G 47/71

(54) **Multisegmentfilterherstellung der Tabak verarbeitenden Industrie**
Multi-segment filter production for the tobacco processing industry
Fabrication d'un filtre multi-segments de l'industrie de traitement du tabac

(30) Priorität: 16.12.2009 DE 102009054801
(43) Veröffentlichungstag der Anmeldung: 22.06.2011
(73) Patentinhaber: HAUNI Maschinenbau AG, 21033 Hamburg (DE)
(72) Erfinder: Meins, Thomas, 23898 Labenz (DE); Nürnberg, Michael, 21398 Neu Neetze (DE); Meinke, Karsten, 23879 Mölln (DE); Jonat, Ilmar, 22159 Hamburg (DE); Eggers, Carsten, 22337 Hamburg (DE)
(74) Vertreter: Seemann, Ralph

(56) Entgegenhaltungen:
- EP-A1- 1 287 753
- EP-A2- 2 294 934
- DE-A1- 3 308 379

## Beschreibung

Die Erfindung betrifft ein Verfahren zum Herstellen von Multisegmentfiltern der Tabak verarbeitenden Industrie sowie eine Fördervorrichtung zur Übergabe von Gruppen von Filtersegmenten bei der Herstellung von Multisegmentfiltern der Tabak verarbeitenden Industrie.

Die Herstellung von Multisegmentfiltern der Tabak verarbeitenden Industrie ist an sich bekannt. Hierzu wird beispielsweise auf WO 03/024256 A2 der Anmelderin verwiesen. Hierbei werden in einer Filtersegmentgruppenbildevorrichtung bzw. einer Einrichtung zum Zusammenstellen von Gruppen von Filtersegmenten, die auch als Filtersegmentzusammenstellvorrichtung bezeichnet werden kann, unterschiedliche Arten von Filtersegmenten in einem Querverfahren zusammengestellt und gefördert. Dies bedeutet, dass die Filtersegmente auf entsprechenden Organen, wie beispielsweise Trommeln, in einer Förderrichtung, die quer zur Längsachse der Filtersegmente liegt bzw. zur Längsachse der Gruppen von Filtersegmenten, die zusammengestellt wurden, gefördert werden.

Die Filtersegmentzusammenstellvorrichtung der WO 03/024256 A2 zeichnet sich durch selbstständige Funktionseinheiten, die jeweils als Modul ausgebildet sind, aus. Diese können bei Änderung des gewünschten Multisegmentfilters einfach und ohne große Umbauarbeiten gegeneinander ausgetauscht werden bzw. weggelassen oder ergänzt werden. So können weiche Filtersegmente wie beispielsweise aus Zelluloseacetat und harte Filtersegmente wie beispielsweise in Hülsen eingebrachte Aktivkohlegranulatsegmente miteinander kombiniert werden. Es können allerdings auch verschiedene weiche Filtersegmente miteinander kombiniert werden wie beispielsweise Zelluloseacetatsegmente und mit Aktivkohle versetzte Zelluloseacetatsegmente oder mit Aktivkohle versetzte Zellulosefiltersegmente miteinander kombiniert werden.

Nach der Zusammenstellung von Gruppen von Filtersegmenten werden diese dann queraxial gefördert und an eine Übergabevorrichtung übergeben, um dann in eine längsaxiale Förderrichtung übergeben zu werden, um einen Strang bzw. Filterstrang zu bilden, der dann von einem Umhüllungsmaterial umhüllt wird und anschließend zu entsprechenden Multisegmentfiltern gewünschter Länge abgelängt werden. Hierbei handelt es sich typischerweise um hergestellte Multisegmentfilter mehrfacher Gebrauchslänge, die dann jeweils in einer Filteransetzmaschine geschnitten und als Filter doppelter Gebrauchslänge zwischen zwei Tabakstöcke gebracht werden und nach Umrollung mit einem Belagpapierstreifen in der Mitte geschnitten werden, um so jeweils zwei Filterzigaretten zu bilden.

Insbesondere zur Variabilität bei der Zusammenstellung von Filtersegmenten und auch zur Übergabe auf den Filterstrang sei explizit auf WO 03/024256 A2 Bezug genommen.

Aus den deutschen Patentanmeldungen DE 10 2009 041 319.7, DE 10 2009 041 320.0 und DE 10 2009 041 318.9, siehe EP 2 294 934 A der Anmelderin sind Maschinen zur Herstellung und Verfahren zum Herstellen von Multisegmentfiltern der Tabak verarbeitenden Industrie bekannt, bei denen insbesondere Augenmerk auf das Einlegen von Gruppen von Filtersegmenten in Filterstränge und in diesen Fällen Filterstränge einer Doppelstrangmaschine gelegt wird. Hierbei werden die Gruppen von Filtersegmenten in zwei Strömen zur Verfügung gestellt, die queraxial gefördert werden, und anschließend werden die Gruppen jeweils eines Stroms auf ein Einlegerad bzw. die Gruppen beider Ströme auf ein Doppeleinlegerad übergeben. Die beiden Ströme von Gruppen von Filtersegmenten werden queraxial gefördert und erst in den jeweiligen Einlegerädern dann längsaxial in die jeweiligen Filterstränge eingebracht, die dann längsaxial in der jeweiligen Doppelstrangmaschine gefördert werden.

Es ist Aufgabe der vorliegenden Erfindung, ausgehend von WO 03/02456 A2 die Multisegmentfilterherstellung zu beschleunigen und die Qualität der Multisegmentfilter mindestens beizubehalten.

Gelöst wird diese Aufgabe durch ein Verfahren zum Herstellen von Multisegmentfiltern der Tabak verarbeitenden Industrie, wobei zunächst ein Strom von queraxial geförderten Gruppen von Filtersegmenten zur Verfügung gestellt wird, wobei die Filtersegmente einer Gruppe längsaxial nebeneinander angeordnet sind, wobei wenigstens jede zweite Gruppe von Filtersegmenten bei der queraxialen Förderung längsaxial verschoben wird, so dass sich ein erster und ein zweiter Teilstrom von queraxial geförderten Gruppen von Filtersegmenten ergibt, wobei anschließend die Gruppen von Filtersegmenten des ersten Teilstroms in einen ersten längsaxial geförderten Filterstrang übergeben werden und die Gruppen von Filtersegmenten des zweiten Teilstroms in einen zweiten längsaxial geförderten Filterstrang übergeben werden.

Durch das erfindungsgemäße Verfahren können sehr schnell und trotzdem schonend Multisegmentfilter hergestellt werden. Die Beschleunigung gegenüber dem Stand der Technik besteht insbesondere darin, dass die Multisegmentfilter nicht nur aus einem hergestellten Filterstrang abgelängt werden, sondern aus zwei parallel laufenden Filtersträngen abgelängt werden, so dass die Multisegmentfilterproduktion und Produktionsmenge bzw. ―geschwindigkeit im Bereich der Strangvorrichtung auf einfache Art und Weise sozusagen verdoppelt werden kann. Ferner besteht ein Vorteil in der Verwendung von einer an sich bekannten Technologie der Zusammenstellung von Gruppen von Filtersegmenten, mit der schon ausreichend Erfahrung gesammelt werden konnte.

Vorzugsweise werden beim Schritt des längsaxialen Verschiebens wenigstens jeder zweiten Gruppe von Filtersegmenten diese so weit verschoben, dass die jeweilige zweite Gruppe von Filtersegmenten vollständig von der jeweiligen ersten Gruppe abgespreizt wird. Diese überlappen in queraxialer Richtung gesehen dann vorzugsweise nicht mehr, sondern haben bevorzugterweise einen Abstand in längsaxialer Richtung und queraxial versetzt zueinander. Dies bedeutet, dass diese in queraxialer Richtung gesehen mit der jeweiligen benachbarten Gruppe von Filtersegmenten nicht überlappen.

Vorzugsweise werden beide Gruppen von Filtersegmenten bewegt, und zwar eine erste Gruppe von Filtersegmenten quer zur Förderrichtung zur einen Seite und eine andere Gruppe von Filtersegmenten quer zur Förderrichtung zur anderen Seite, vorzugsweise alternierend zur einen und zur anderen Seite. Quer zur Förderrichtung bedeutet insbesondere in längsaxialer Richtung der Gruppen von Filtersegmenten, solange die Gruppen von Filtersegmenten queraxial gefördert werden.

Vorzugsweise werden zum längsaxial fluchtenden Anordnen die Gruppen von Filtersegmenten des ersten Teilstroms nach vorne in Förderrichtung verschwenkt und die Gruppen von Filtersegmenten des zweiten Teilstroms nach hinten entgegen der Förderrichtung verschwenkt. Beim queraxialen Fördern der Gruppen von Filtersegmenten, die nun in zwei Bahnen, die längsaxial nebeneinander angeordnet sind, gefördert werden, werden jeweils zwei Gruppen von Filtersegmenten längsaxial miteinander fluchtend durch entsprechendes Verschwenken auf dem jeweiligen Förderorgan angeordnet. Diese Maßnahme vereinfacht die Übergabe der jeweiligen Bahn bzw. des jeweiligen Stroms von queraxial geförderten Gruppen von Filtersegmenten in einen längsaxial geförderten Filterstrang.

Alternativ zum längsaxial fluchtenden Anordnen durch Verschwenken werden die Gruppen von Filtersegmenten des ersten Teilstroms auf einer anderen Förderbahn als die Gruppen von Filtersegmenten des zweiten Teilstroms gefördert. Hierbei sind die Rotationsachsen der Förderbahnen bzw. die Förderbahnen parallel zueinander versetzt. Außerdem treffen sich die Förderbahnen an den Übergabestellen zu den Nachbartrommeln. Hierdurch können die gestaffelt vorliegenden Gruppen von Filtersegmenten in gestaffelter Form abgenommen werden und in längsaxial fluchtender Form übergeben werden. Hierzu ist es beispielsweise möglich, im Wesentlichen gleichzeitig bzw. kurz hintereinander zwei Gruppen von Filtersegmenten, die gestaffelt vorliegen und benachbart zueinander liegen von einem Förderorgan, auf dem vorzugsweise das längsaxiale Verschieben der Gruppen von Filtersegmenten zueinander geschieht, abgenommen werden. Durch die versetzten Förderbahnen können die entsprechend zunächst als benachbart und gestaffelt vorliegenden Gruppen von Filtersegmenten längsaxial fluchtend auf ein nächstes Förderorgan übergeben werden, und zwar nachdem diese ungefähr um 180° auf der Förderbahn bewegt wurden.

Das Versetzen der Förderbahnen geschieht insbesondere durch ein Verschwenken der Förderbahnen zueinander, insbesondere um einen vorgebbaren Winkel, wobei als Mittelachse des Verschwenkens eine Achse am Umfang der Förderbahn vorgesehen ist. Die Achse liegt hierbei zweckmäßigerweise lotrecht in oder parallel zu einem Muldengrund einer Trommel in der Position zur Übergabe einer Gruppe von Filtersegmenten an ein Abförderorgan.

Vorzugsweise sind die Förderbahnen Kreisbahnen, wobei die Mittelpunkte der Kreisbahnen zueinander, insbesondere um einen halben Abstand der gestaffelten Gruppen von Filtersegmenten, versetzt sind.

Vorzugsweise werden der erste und der zweite längsaxial geförderte Filterstrang jeweils mit einem Umhüllungsmaterial umhüllt. Dies geschieht beim längsaxialen Fördern der Filterstränge. Anschließend werden dann vorzugsweise Multisegmentfilter abgelängt, die dann für die Weiterverarbeitung verwendet werden können.

Gemäß der Erfindung werden somit Gruppen von Filtersegmenten zunächst in einer einbahnigen queraxialen Förderrichtung zusammengestellt und gefördert. Diese einbahnige Förderung wird in eine zweibahnige Förderrichtung von Gruppen von Filtersegmenten umgewandelt, wobei, vorzugsweise alternierend, Gruppen von Filtersegmenten auseinander gespreizt werden, um dann die so gestaffelt vorliegenden Gruppen von Filtersegmenten in einer Art Umkehrstaffeln oder Rückwärtsstaffeln längsaxial miteinander auszurichten. Hierdurch entstehen zwei Bahnen von Gruppen von Filtersegmenten, wobei jeweils eine Gruppe von Filtersegmenten einer Bahn mit einer anderen Gruppe von Filtersegmenten der anderen Bahn in Richtung der Längsachse der jeweiligen Gruppe miteinander fluchten. Diese werden dann in zwei Filterstränge übergeben, die längsaxial gefördert werden. Im Rahmen der Erfindung beinhaltet der Begriff des längsaxial fluchtenden Anordnens auch ein Zusammenführen der Gruppen von Filtersegmenten, so dass diese längsaxial miteinander fluchten.

Die Aufgabe wird ferner durch eine Fördervorrichtung zur Übergabe von Gruppen von Filtersegmenten bei der Herstellung von Multisegmentfiltern der Tabak verarbeitenden Industrie gelöst, umfassend eine Spreiztrommel, die bewegbare Organe aufweist, wobei die Organe jeweils wenigstens eine Mulde zur Aufnahme einer Gruppe von Filtersegmenten aufweisen und wobei die Organe längsaxial zu der Längsachse der jeweiligen Mulde verschiebbar sind, und wobei außerdem eine Staffelvorrichtung, insbesondere eine Staffeltrommel, vorgesehen ist, die Mulden zur Aufnahme einer Gruppe von Filtersegmenten aufweist, wobei Gruppen von Filtersegmenten aus Mulden der Spreiztrommel auf Mulden der Staffelvorrichtung, insbesondere der Staffeltrommel, übergebbar sind und, wobei die Mulden der Staffelvorrichtung, insbesondere der Staffeltrommel, eine Bewegung ausführen, so dass zwei Gruppen von Filtersegmenten aus einer gestaffelten Anordnung in eine längsaxial fluchtende Anordnung überführbar sind.

Eine Kombination aus einer Spreiztrommel und einer Staffelvorrichtung ist aus der DE 33 08 379 A bekannt.

Durch die erfindungsgemäße Fördervorrichtung kann zügig und effizient sehr schonend ein Förderstrom von Gruppen von Filtersegmenten in zwei Teilförderströme überführt werden, die jeweils in einen Filterstrang umgewandelt bzw. überführt werden können. Vorzugsweise weist die Staffeltrommel zwei Reihen verschwenkbarer Arme auf, in denen die Mulden vorgesehen sind, wobei, insbesondere längsaxial, benachbarte Arme der Staffeltrommel so bewegbar sind, dass zwei Gruppen von Filtersegmenten aus einer gestaffelten Anordnung in eine längsaxial fluchtende Anordnung überführbar sind.

Vorzugsweise sind die beweglichen Organe der Spreiztrommel Schlitten, die insbesondere vorzugsweise parallel zur Rotationsachse der Spreiztrommel verschiebbar sind. Vorzugsweise werden benachbarte Arme der zwei Reihen der Staffeltrommel in Förderrichtung der Staffeltrommel gegeneinander verschwenkt, um eine längsaxial fluchtende Anordnung der jeweiligen Mulden der benachbarten Arme zu erzielen. Die Mulden liegen hierbei auch vorzugsweise parallel zur Rotationsachse der Staffeltrommel.

Vorzugsweise weist die Staffeltrommel alternativ zwei Trommelkörper jeweils mit parallel zueinander angeordneten Mulden auf, wobei die Rotationsachsen der Trommelkörper parallel zueinander versetzt sind. Hierdurch ist auch eine sehr effiziente und zuverlässige Übergabe von einer gestaffelten Anordnung in eine längsaxial fluchtende Anordnung möglich. Im Rahmen der Erfindung wird im Folgenden für die Bezeichnung Staffeltrommel auch der Begriff Inversstaffeltrommel verwendet, um die Funktion der Staffeltrommel besser zu erläutern.

Vorzugsweise ist eine selbstständige Funktionseinheit einer Maschine zur Herstellung von Multisegmentfiltern der Tabak verarbeitenden Industrie in einem Doppelstrangverfahren vorgesehen, wobei diese eine Filtersegmentzusammenstellvorrichtung aufweist, die Gruppen von Filtersegmenten zusammenstellt und queraxial fördert und mit einer Doppelstrangmaschine oder einer Übergabevorrichtung zu einer Doppelstrangmaschine verbindet und wobei diese selbstständige Funktionseinheit eine erfindungsgemäße Fördervorrichtung aufweist.

Die selbstständige Funktionseinheit ist vorzugsweise als ein Modul ausgebildet. Die selbstständige Funktionseinheit weist hierzu vorzugsweise ein Gehäuse auf oder ein Gerüst für ein Gehäuse, das mit einem anderen Gehäuse bzw. einem anderen Gerüst einer weiteren selbstständigen Funktionseinheit lösbar verbindbar ist. Hierzu können beispielsweise ein oder mehrere ineinander greifende Verbindungselemente vorgesehen sein.

Beispielsweise kann auf der stromaufwärtigen Seite der selbstständigen Funktionseinheit eine erste Verbindungsvorrichtung vorliegen und auf der gleichen Höhe auf der stromabwärtigen Seite einer zu der vorherigen selbstständigen Funktionseinheit stromaufwärts liegenden angeordneten selbstständigen Funktionseinheit eine zur ersten Verbindungsvorrichtung formkomplementäre Verbindungsvorrichtung.

In der selbstständigen Funktionseinheit oder in einer, insbesondere ergänzenden, Übergabevorrichtung kann dann noch wenigstens ein Doppelübergaberad oder können zwei einzelne Übergaberäder bzw. eine Doppelübergabetrommel bzw. zwei einzelne Übergabetrommeln vorgesehen sein, die entsprechende Gruppen von Filtersegmenten in Einlegeräder oder ein Doppeleinlegerad übergeben. Hierzu sei insbesondere auf die Varianten der Übergabe von zwei Bahnen von Gruppen von Filtersegmenten, die queraxial gefördert werden, in zwei längsaxial geförderte Filterstränge verwiesen, wie dieses beispielsweise in der DE 10 2009 041 318.9 der Anmelderin beschrieben ist. Im Gegensatz zu der dort beschriebenen Vorrichtung arbeitet die zur Erfindung gehörende Filtersegmentzusammenstellvorrichtung allerdings einbahnig, da gemäß der Erfindung die Gruppen von Filtersegmenten in einer Bahn zusammengestellt und queraxial gefördert werden bzw. in einem einbahnigen Strom zusammengestellt und gefördert werden.

Vorzugsweise umfasst eine Multisegmentfilterherstellmaschine eine Filtersegmentzusammenstellvorrichtung, die Gruppen von Filtersegmenten zusammenstellt und queraxial fördert, sowie eine erfindungsgemäße Fördervorrichtung, die vorstehend beschrieben ist, oder eine erfindungsgemäße selbstständige Funktionseinheit, die vorstehend beschrieben ist, und eine Doppelstrangmaschine, die längsaxial zwei Filterstränge bildet und fördert, aus denen entsprechend Multisegmentfilter ablängbar sind.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Frontalansicht einer erfindungsgemäßen Multisegmentfilterherstellmaschine,
- Fig. 2: eine schematische Draufsicht auf eine erfindungsgemäße Multisegmentfilterherstellmaschine,
- Fig. 3: eine schematische Draufsicht auf Gruppen von Filtersegmenten, die aus einem einbahnigen Strom in zwei Teilströme umgewandelt werden,
- Fig. 4: eine schematische dreidimensionale Darstellung einer Spreiztrommel,
- Fig. 5: einen Teil der Spreiztrommel aus Fig. 4 in abgerollter schematischer Draufsicht,
- Fig. 6: eine schematische dreidimensionale Darstellung einer Staffeltrommel,
- Fig. 7: eine schematische Ansicht einer weiteren erfindungsgemäßen Staffeltrommel,
- Fig. 8: eine schematische Ansicht einer Übergabe von gestaffelten Gruppen von Filtersegmenten, und
- Fig. 9: eine schematische Ansicht einer weiteren Übergabe von gestaffelten Gruppen von Filtersegmenten.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

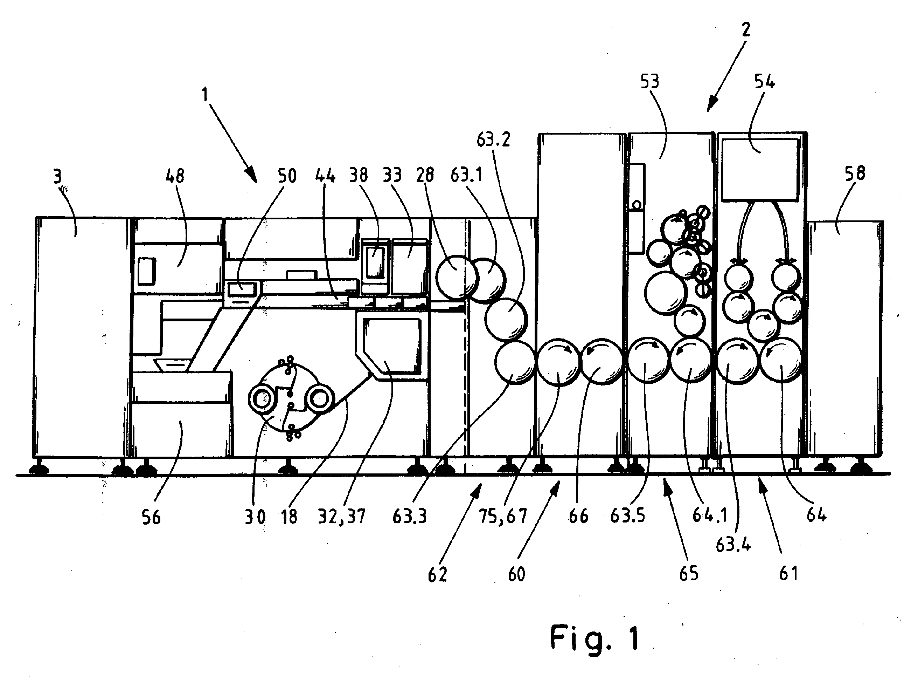

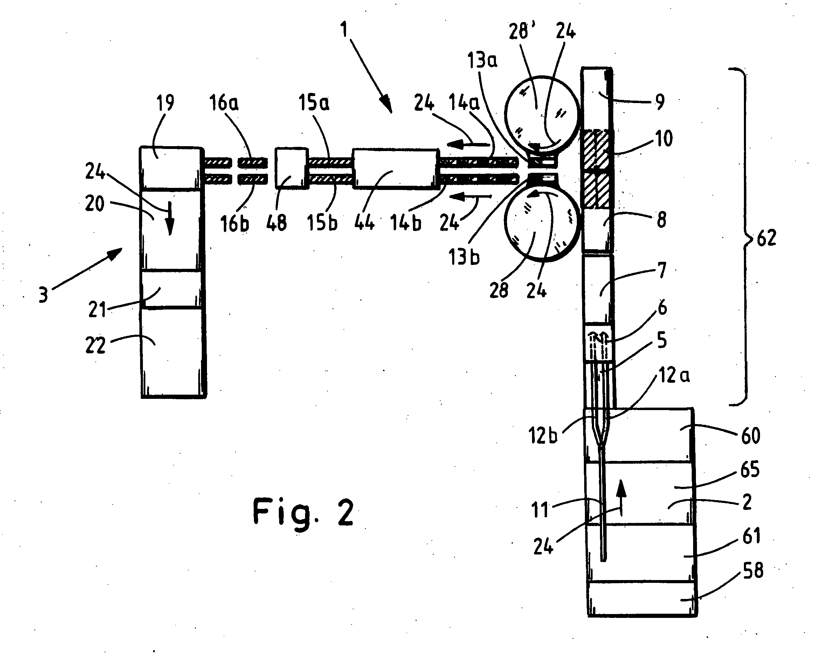

Fig. 1 zeigt schematisch in einer Frontalansicht eine erfindungsgemäße Multisegmentfilterherstellmaschine. Hierbei ist eine Gruppenbildevorrichtung 2 vorgesehen und eine Strangbildevorrichtung 1. Die Gruppenbildevorrichtung 2 kann auch als Filtersegmentzusammenstellvorrichtung bezeichnet werden. Die Strangbildevorrichtung 1 ist tatsächlich nicht fluchtend mit der Gruppenbildevorrichtung 2. Stattdessen soll in diesem Ausführungsbeispiel eine Anordnung vorgesehen sein, bei der die Strangbildevorrichtung 1 senkrecht zur Gruppenbildevorrichtung 2 angeordnet ist, und zwar ungefähr bei der gestrichelten Linie. Diese Anordnung ist in entsprechender Draufsicht in Fig. 2 in schematischer Darstellung zu erkennen.

In der Gruppenbildevorrichtung 2 werden Gruppen 13a, 13b aus Filtersegmenten 17a ― 17d gebildet und queraxial gefördert. Hierzu werden zunächst in einer Hartelementeinheit 61 aus einem Hartelementvorratsbehälter 54 harte Filtersegmente (beispielsweise 17b und 17d) an entsprechende Trommeln übergeben und auf eine Zusammenstelltrommel 64 aufgebracht. Die entsprechenden Trommeln haben üblicherweise Mulden, in die die Filtersegmente eingelegt werden können und entsprechend mit Saugluft gehalten werden. Die Zusammenstellung geschieht so, das vorzugsweise zwischen den harten Filtersegmenten 17b, 17d auf der Zusammenstelltrommel 64 ein Abstand ist, der so groß oder etwas größer ist als die längsaxiale Erstreckung eines dazwischen zu positionierenden weichen Filtersegmentes 17c.

Die zwei in eine Trommel eingelegten harten Filtersegmente werden von der Zusammenstelltrommel 64 auf die Übergabetrommel 63.4 übergeben. Von dort gelangen diese auf die Zusammenstelltrommel 64.1 der Weichelementeinheit 65. Die Einheiten 60, 61, 62, 65 sind als selbstständige Funktionseinheiten ausgebildet, die als Module ausgestaltet sind und entsprechend ausgetauscht, ergänzt oder ersetzt werden können, ohne dass erhebliche Umbauarbeiten notwendig sind. Hierzu wird insbesondere auf WO 03/024256 A2 verwiesen.

In der Weichelementeinheit 65 wird ein Filterelement mehrfacher Gebrauchslänge aus dem Weichelementvorratsbehälter 53 ausgetragen und, wie dieses dort dargestellt ist, zunächst zweimal geschnitten, entsprechend gestaffelt und hintereinander in queraxialer Richtung fluchtend angeordnet, um dann erneut noch einmal geschnitten zu werden. Diese dann in jeweils einer Mulde vorliegenden geschnittenen Filtersegmente 17a und 17c werden auseinandergespreizt auf die Zusammenstelltrommel 64.1 übergeben und neben und/oder zwischen die dort schon vorliegenden Hartelemente 17b und 17d bzw. harten Filtersegmente gelegt. Anschließend werden diese entweder auf der Zusammenstelltrommel 64.1 oder auf der Übergabetrommel 63.5 zusammengeschoben.

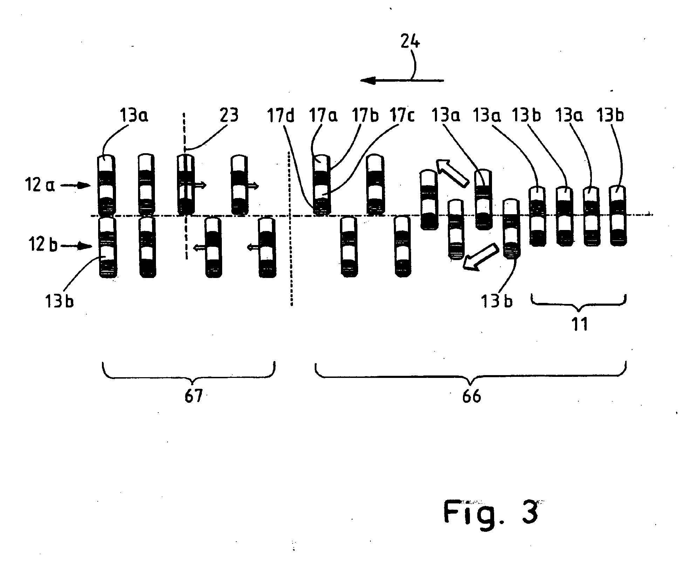

Es ergeben sich damit jeweils Gruppen 13a, 13b von Filtersegmenten, wie diese in Fig. 3 auf der rechten Seite dargestellt sind, und die in einem einbahnigen Filtersegmentgruppenstrom 11 vorliegen. Diese Gruppen von Filtersegmenten werden dann in die Konversionseinheit 60 übergeben, in der aus dem einbahnigen Filtersegmentgruppenstrom ein zweibahniger Filtersegmentgruppenstrom 12a und 12b erzeugt wird.

Dieses geschieht über eine Spreiztrommel 66 und beispielsweise eine Inversstaffeltrommel 67, deren Funktion im Folgenden noch näher beschrieben wird. Im Rahmen der Erfindung beinhaltet der Begriff Staffeltrommel auch den Begriff Inversstaffeltrommel. Eine Inversstaffeltrommel ist im Rahmen der Erfindung auch eine Staffeltrommel, die eine Mehrzahl von Gruppen von Filtersegmenten, die in einer gestaffelten Anordnung vorliegen, in eine längsaxial fluchtende Anordnung überführt. Eine Mehrzahl von Gruppen sind im Rahmen der Erfindung auch zwei Gruppen.

Anschließend werden die so gebildeten zweibahnigen Filtersegmentgruppenströme 12a und 12b über entsprechende Übergabetrommeln 63.3, 63.2 und 63.1 auf zwei Einlegeräder 28 bzw. 28' übergeben und von dort in zwei längsaxial geförderte Filterstränge übergeben. Auch dies wird im Folgenden noch näher beschrieben. Die Übergabetrommeln 63.1 bis 63.3 dienen nur zur vereinfachten Darstellung der Übergabe. Die Übergabe wird nachstehend genauer angegeben.

Es werden dann wie üblich in einem Format 44 die zwei Filterstränge geformt und mit einem Umhüllungsmaterialstreifen 18 umhüllt. Der Umhüllungsmaterialstreifen 18 wird wie üblich an einem Zwickel bzw. am äußeren Rand mit einer oder mehreren Leimsorten in der Beleimungsvorrichtung 32 bzw. 37 beleimt. Hierzu sind Leimvorratsbehälter 33 und 38 vorgesehen. Der Umhüllungsmaterialstreifen wird von Bobinen abgezogen, die auf einer Bobinenhalterung 30 angeordnet sind.

Nach der Umhüllung der beiden Filterstränge werden diese in einer Schneidvorrichtung 48 in entsprechende Multisegmentfilter 16a, 16b abgelängt. Der Strangabschneider 50 dient dazu, beim Startvorgang der Filterstrangherstellung in dem Moment, in dem zwei ordnungsgemäße Stränge hergestellt werden, die vorher nach unten in den Müllbehälter 56 abgelenkt werden, abzuschneiden, damit diese dann zur Schneidvorrichtung 48 gefördert werden können. Anschließend werden die entsprechenden gefertigten Multisegmentfilter einfacher oder mehrfacher Gebrauchslänge in einer Abfördervorrichtung 3 abgefördert.

Fig. 2 zeigt eine entsprechende erfindungsgemäße Multisegmentfilterherstellmaschine in einer schematischen Draufsicht. Es sind die entsprechenden selbstständigen Funktionseinheiten der Gruppenbildevorrichtung 2 dargestellt. Auch in dieser Fig. ist eine Energieversorgungseinheit 58 angedeutet.

Es ist ferner in der Gruppenbildevorrichtung 2 der einbahnige Filtersegmentgruppenstrom 11 angedeutet, der in der Konversionseinheit 60 in zwei parallele Filtersegmentgruppenströme 12a und 12b aufgeteilt wird. Bei den Filtersegmentgruppenströmen 12a und 12b handelt es sich um zwei Bahnen bzw. zwei Teilströme.

Die Gruppen von Filtersegmenten der beiden Filtersegmentgruppenströme 12a und 12b bzw. Filtersegmentgruppenteilströme 12a, 12b werden auf eine Übergabetrommel 5 übergeben und von dort auf eine weitere Übergabetrommel 6. Es schließt sich eine Beschleunigertrommel 7 an, an die sich eine Übergabetrommel 8 anschließt. Anschließend ist eine Abnehmertrommel 9 vorgesehen, die einen Filtersegmentgruppenteilstrom, entweder 12a oder 12b, abnimmt und auf eine darunterliegende, was hier gestrichelt dargestellt ist, so genannte Doppelübergabetrommel 10, übergibt.

In der Doppelübergabetrommel 10 sind zwei entgegengesetzt rotierende Trommelteile vorgesehen, in der jeweils ein Filtersegmentgruppenstrom 12a bzw. 12b gefördert wird, die auf die Einlegeräder 28 und 28' übergeben werden.

Die Übergabeeinheit 62 ist beispielsweise in Fig. 3 der DE 10 2009 041 319.7 der Anmelderin näher dargestellt und dort erläutert. Es können auch andere Übergabeeinheiten 62 vorgesehen sein, die beispielsweise im Zusammenhang mit den Figuren 3, 4, 5a, 5b und 6 der DE 10 2009 041 318.9 der Anmelderin vorgesehen sein können bzw. diesen entsprechen. Es wird explizit auf diese Varianten von Übergabeeinheiten verwiesen. Diese haben gemeinsam, dass zwei Bahnen von Filtersegmentgruppen bzw. zwei Filtersegmentgruppenströme, die die Filtersegmente queraxial fördern, in zwei Einlegeräder übergeben werden, die die Gruppen von Filtersegmenten dann in Filterstränge überführen, die längsaxial gefördert werden.

Die entsprechend übergebenen Gruppen von Filtersegmenten 13a und 13b werden von den Einlegerädern 28 und 28' in Filterstränge 14a und 14b überführt, die in längsaxialer Förderrichtung 24 gefördert werden. Der Strangbildevorrichtung, die als zweibahnige Strangbildevorrichtung 1 ausgebildet ist, schließt sich dann eine Formatkammer 44 an, in der die Form des Filterstrangs vorgegeben wird und in der eine Umhüllung des Filterstrangs mit einem Umhüllungsmaterial, das hier nur dadurch angedeutet ist, dass die umhüllten Filterstränge 15a und 15b nicht mehr in Filtersegmente unterteilt dargestellt sind, umhüllt. Die Gruppen von Filtersegmenten 13a und 13b weisen in dem hauptsächlich in dieser Anmeldung verwendeten Ausführungsbeispiel beispielsweise vier Filtersegmente auf. Diese sind in Fig. 3 entsprechend dargestellt.

Nachdem der umhüllte Filterstrang 15a, 15b jeweils gebildet wurde, werden die jeweiligen Stränge in der Schneidvorrichtung 48 in Multisegmentfilter 16a und 16b abgelängt. Die Multisegmentfilter 16a und 16b gelangen dann in die Abfördervorrichtung 3 und dort zunächst in eine Übergabevorrichtung 19, in der die längsaxial geförderten Multisegmentfilter 16a und 16b in eine queraxiale Förderrichtung überführt werden. Dieses ist beispielsweise auch in der deutschen Patentanmeldung DE 10 2009 041 318.9 der Anmelderin dargestellt. Hierbei wird eine zweibahnige so genannte Spinne der Anmelderin, die bei zweibahnigen Zigarettenstrangmaschinen üblich ist, verwendet. Von der Übergabevorrichtung 19 gelangen die Multisegmentfilter 16a und 16b queraxial hintereinander angeordnet in queraxialer Förderrichtung auf eine Messtrommel 20, in oder an der eine Sensorvorrichtung angeordnet ist.

Nach dem Ausmessen der Multisegmentfilter 16a und 16b werden diejenigen, die fehlerhaft sind, in der Ausschleustrommel 21 ausgeschleust. Diejenigen, die in Ordnung sind, werden über die Abgabetrommel 22 abgegeben.

Fig. 3 zeigt schematisch die Förderung und Anordnung von Filtersegmentgruppen 13a und 13b. Die Filtersegmentgruppen 13a und 13b weisen jeweils Filtersegmente 17a, 17b, 17c und 17d auf. Beispielsweise können die Filtersegmente 17b und 17d Hartsegmente bzw. Hartelemente sein und die Filtersegmente 17a und 17c weiche Filtersegmente. Es ist ferner die Förderrichtung 24 angezeigt.

In der angedeuteten Spreiztrommel 66 werden die Filtersegmente 13a und 13b alternierend, also hintereinanderliegend, zunächst in einem Filtersegmentgruppenstrom 11, der einbahnig ist, gefördert. Dann werden die Filtersegmentgruppen 13a und 13b auseinander gespreizt, und zwar in längsaxialer Richtung auseinander, bis diese soweit voneinander wegbewegt wurden, dass diese in Förderrichtung 24, also quer zur Längsachse 23 der Filtersegmente bzw. Filtersegmentgruppen, nicht überlappen. Anschließend werden diese Filtersegmentgruppen 13a und 13b, die nun in zwei Filtersegmentströmen 12a und 12b vorliegen, also in entsprechenden Filtersegmentgruppenteilströmen, 12a und 12b, auf die Inversstaffeltrommel 67 übergeben und dort gemäß den dort angegebenen Pfeilen so zueinander bewegt bzw. verschwenkt, dass diese längsaxial miteinander fluchten. Dieses ist bei den ganz links dargestellten Gruppen von Filtersegmenten 13a und 13b entsprechend dargestellt. Es ist zu erkennen, dass die Gruppen von Filtersegmenten dann einen entsprechend größeren Abstand in Förderrichtung voneinander haben als im Bereich, wo die Filtersegmentgruppen noch im einbahnigen Filtersegmentgruppenstrom 11 vorgelegen haben.

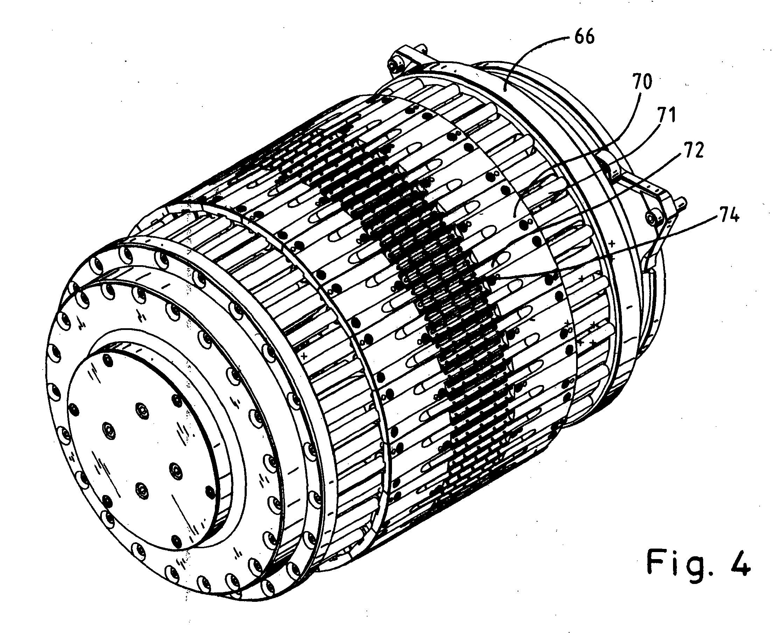

Fig. 4 zeigt eine entsprechende Spreiztrommel 66 in schematisch dreidimensionaler Darstellung. Es sind mehrere Trommelschlitten 70 vorgesehen, in denen entsprechende Mulden 72 vorgesehen sind. Die Schlitten 70 können auf Führungsschienen 71, die im Wesentlichen parallel zur Rotationsachse der Trommel liegen, verschoben bzw. bewegt werden. Es sind auch entsprechende Saugluftöffnungen 74 gezeigt, die dazu dienen, die aufgenommenen Filtersegmente 17a bis 17d zu halten.

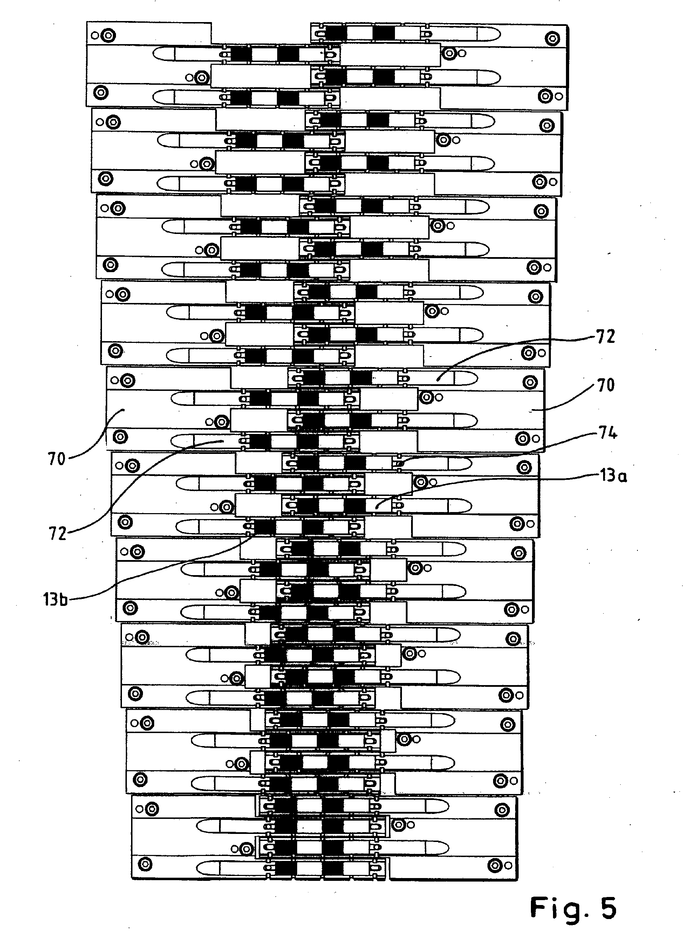

In Fig. 5 ist schematisch eine Draufsicht auf die entsprechenden Trommelschlitten 70 dargestellt, die zur besseren Veranschaulichung in die Zeichenebene abgerollt sind. Es ist zu erkennen, dass jeder Trommelschlitten 70 zwei Mulden 72 aufweist. Die Mulden 72 sind in Muldenfinger eingebracht, die in die Muldenfinger der längsaxial gegenüberliegenden Trommelschlitten eingreifen, wobei als Längsachse hier die Längsachse einer Mulde zu verstehen ist. Von unten in Fig. 5 nach oben sind die Trommelschlitten 70 immer weiter auseinandergezogen dargestellt, bis die zunächst queraxial fluchtenden Filtersegmentgruppen 13a und 13b in queraxialer Richtung nicht mehr überlappen.

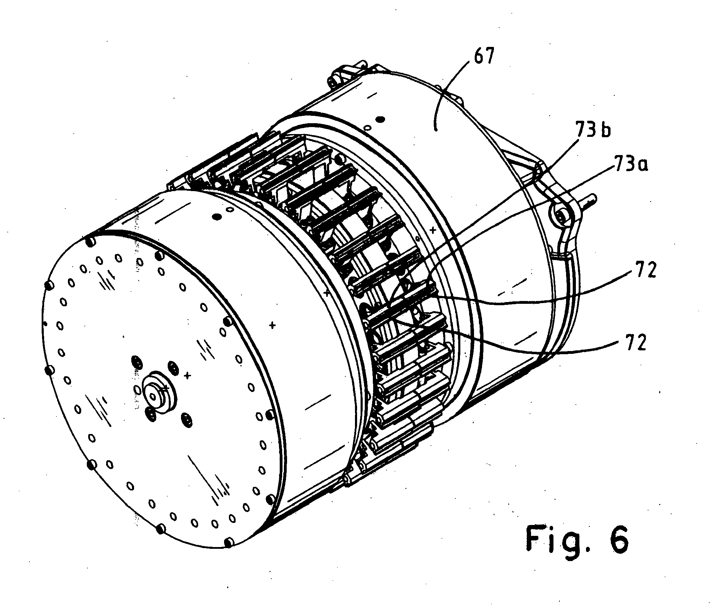

In Fig. 6 ist schematisch eine Inversstaffeltrommel in dreidimensionaler Darstellung gezeigt. Es sind Schwenkarme 73a und 73b vorgesehen, die zur Aufnahme der Filtersegmentgruppen aus Fig. 5, die entsprechend beabstandet voneinander und gestaffelt vorliegen, auseinander geschwenkt werden können, um nach der Aufnahme der Filtersegmentgruppen wieder zueinander geschwenkt zu werden, so dass dann jeweils zwei Filtersegmentgruppen längsaxial fluchtend angeordnet sind. Hierzu sind auch entsprechende Mulden 72 in den Schwenkarmen 73a und 73b vorgesehen.

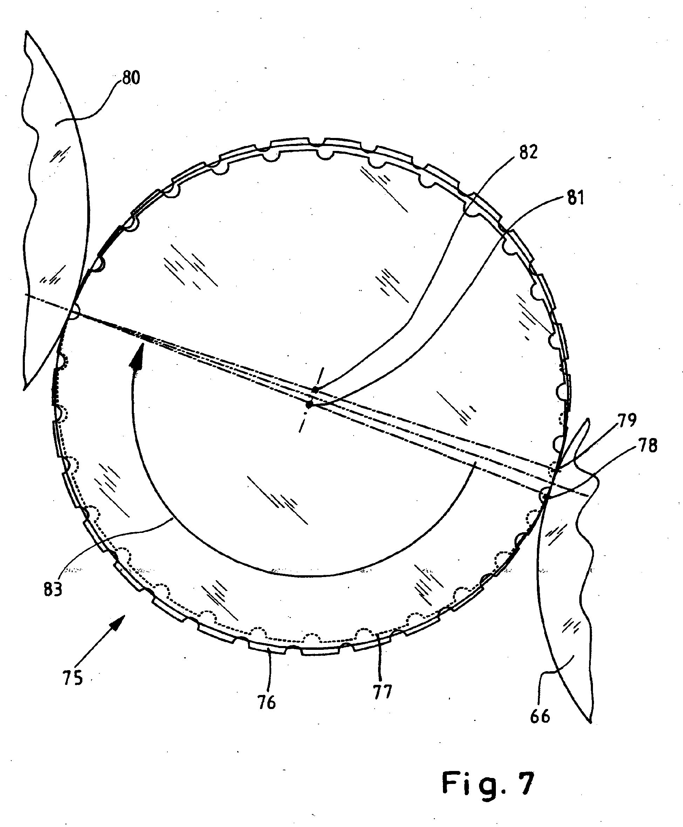

Fig. 7 zeigt schematisch eine weitere Ausführungsform einer Staffelvorrichtung in Form einer Inversstaffeltrommel 75, die aus zwei Trommelkörpern 76 und 77 besteht, in einer Seitenansicht. Die Förderrichtung ist von rechts unten nach links oben in Fig. 7.

Aus der Spreiztrommel 66 werden Gruppen von Filtersegmenten, die in längsaxialer Richtung der Gruppen von Filtersegmenten hintereinander angeordnet und außerdem quer hierzu gestaffelt sind, von der Inversstaffeltrommel 75 übernommen. Dieses geschieht im Bereich der Mulden 78 und 79. Es werden somit im Wesentlichen fast gleichzeitig bzw. kurz hintereinander zwei Gruppen von Filtersegmenten in die Mulden 78 und 79 übergeben. Die Mulde 78 ist eine Mulde, die auf dem ersten Trommelkörper 76 angeordnet ist. Die Mulde 79 ist eine Mulde, die auf dem zweiten Trommelkörper 77 angeordnet ist.

Die beiden Trommelkörper 76 und 77 sind versetzt zueinander angeordnet, und zwar in diesem Ausführungsbeispiel ungefähr um einen halben Abstand des Abstandes der gestaffelten Gruppen von Filtersegmenten bei der Übergabe von der Spreiztrommel 66. Damit beträgt der Abstand ungefähr ein Viertel des Muldenabstandes auf dem ersten und dem zweiten Trommelkörper 76 bzw. 77. Dieses ist dadurch zu erkennen, dass die Drehachse 81 des ersten Trommelkörpers 76 zur Drehachse 82 des zweiten Trommelkörpers 77 entsprechend parallel versetzt angeordnet ist. Die Inversstaffeltrommel 75 und damit der erste Trommelkörper 76 und der zweite Trommelkörper 77 bewegt sich entlang der Förderrichtung 83. Die erste Drehachse 81 und zweite Drehachse 82 liegen im jeweiligen Mittelpunkt der ausgeführten Kreisbewegung der jeweiligen Mulden des ersten und zweiten Trommelkörpers.

Die von der Spreiztrommel 66 abgenommenen Gruppen von Filtersegmenten werden gemäß der angedeuteten Förderrichtung 83 um etwa 180° auf ihrer jeweiligen Kreisbahn, die zueinander versetzt sind, gefördert, wobei durch die Versetzung der Mittelpunkte bzw. Drehachsen im Bereich der Übergabe zur Trommel 80 die Mulde 78 des ersten Trommelkörpers 76 mit der Mulde 79 des zweiten Trommelkörpers 77 längsaxial fluchten. Hierdurch kann eine Inversstaffelung bzw. Entstaffelung der Gruppen von Filtersegmenten erzielt werden.

Eine analog zu den vorgenannten Vorrichtungen aufgebaute Vorrichtung kann auch drei oder mehr Filterstränge mit Filtersegmentgruppen versorgen.

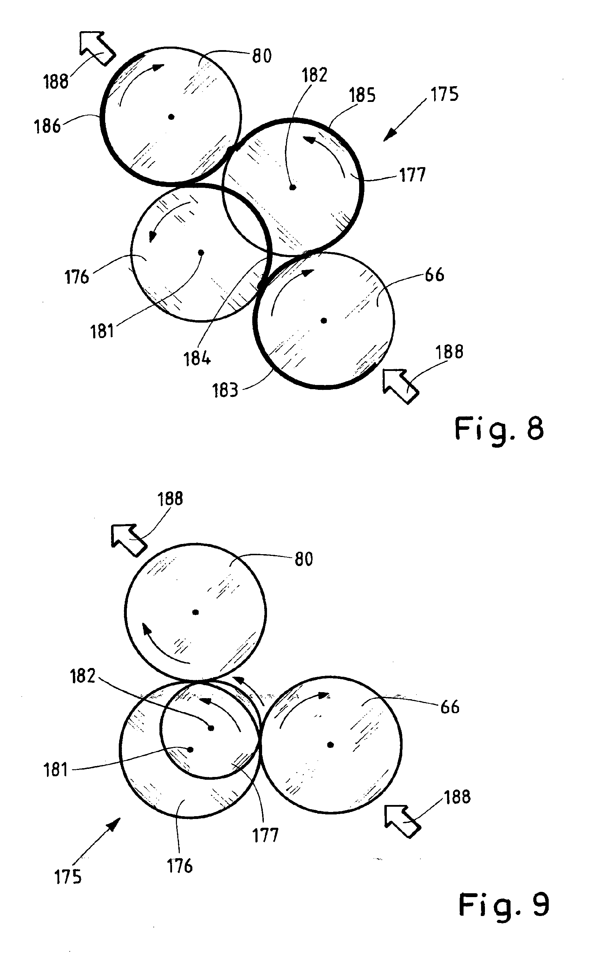

Fig. 8 zeigt eine schematische Ansicht einer erfindungsgemäßen Übergabe von gestaffelten vorliegenden Gruppen von Filtersegmenten von einer Spreiztrommel 66, auf der die Gruppen von Filtersegmenten längsaxial verschoben werden, zu einer Trommel 80. Hierbei dienen eine erste Trommel 176, die um eine erste Drehachse 181 drehbar ist, und eine zweite Trommel 177, die um eine zweite Drehachse 182 drehbar ist, als Staffelvorrichtung, mittels der eine Inversstaffelung der auf der Spreiztrommel 66 vorliegenden gestaffelten Gruppen von Filtersegmenten in eine längsaxial fluchtende Anordnung auf der Trommel 80 in den entsprechenden Mulden dort ermöglicht ist. Die Staffelvorrichtung 175 weist also eine erste Trommel 176 und eine zweite Trommel 177 auf, die zusammen als Inversstaffelvorrichtung bezeichnet werden können.

Die Förderrichtung der Gruppen von Filtersegmenten ist grob durch die beiden Pfeile, die von rechts unten nach links oben in der Fig. 8 zeigen, dargestellt. Die Rotationsrichtung der jeweiligen Trommeln ist auch durch Pfeile dargestellt. Die Belegung der Mulden der jeweiligen Trommeln mit Gruppen von Filtersegmenten ist durch Bezugsziffern 183 bis 186 dargestellt. Auf der Spreiztrommel 66 liegen die Gruppen von Filtersegmenten in den belegten Mulden 183 vor und werden entsprechend gespreizt, so dass diese gestaffelt vorliegen.

An einem tangentialen Berührungspunkt bzw. an einer Stelle, an der die erste Trommel 176 am nächsten an der Spreiztrommel 66 liegt, wird ein Filtersegmentgruppenteilstrom, beispielsweise der Filtersegmentgruppenteilstrom 12a, abgenommen und belegt entsprechende Mulden 184 auf der ersten Trommel 176. Diese Gruppen von Filtersegmenten des ersten Filtersegmentgruppenteilstroms 12a werden dann in entsprechende Mulden der Trommel 80 übergeben, so dass dort auch belegte Mulden 186 entstehen. Entsprechend werden Filtersegmentgruppen des zweiten Filtersegmentgruppenteilstroms 12b an der Stelle von der Staffeltrommel 66 von der zweiten Trommel 177 abgenommen, an der diese am nächsten zueinander liegen. Die Filtersegmentgruppen des zweiten Filtersegmentgruppenteilstroms 12b werden dann in die Mulden der Trommel 80 übergeben. In dem Moment, in dem die Filtersegmentgruppen des ersten Filtersegmentgruppenteilstroms 12a in die Trommel 80 gegeben werden, gelangen diese in eine Anordnung mit Gruppen von Filtersegmenten des zweiten Filtersegmentgruppenteilstroms 12b, so dass die jeweiligen Filtersegmentgruppen längsaxial in den jeweiligen Mulden der Trommel 80 zueinander angeordnet sind.

Die Inversstaffelung, d.h. die Überführung der Filtersegmentgruppen von einer gestaffelten Anordnung in eine längsaxial fluchtende Anordnung, geschieht hierbei insbesondere dadurch, dass die jeweiligen Gruppen von Filtersegmenten der unterschiedlichen Filtersegmentgruppenteilströme 12a und 12b unterschiedliche Umlaufweglängen auf den Trommeln 176 und 177 zurücklegen.

Fig. 9 zeigt eine weitere erfindungsgemäße Ausführungsform einer Übergabe von gestaffelten Gruppen von Filtersegmenten. Hierbei überschneiden sich die beiden Trommeln 176 und 177 der Staffelvorrichtung 175 stärker als im Vergleich zu Fig. 8 und liegen insbesondere asymmetrisch zur Förderrichtung 188 vor. Die Trommeln haben einen unterschiedlich großen Umfang. Durch den unterschiedlich großen Umfang wird eine unterschiedliche Umlaufweglänge der geförderten Gruppen von Filtersegmenten ermöglicht.

Auch hierdurch kann effizient und sicher eine inverse Staffelung, d.h. eine Überführung von Gruppen von Filtersegmenten, die in einer gestaffelten Anordnung auf der Spreiztrommel 66 vorliegen, in eine längsaxial fluchtende Anordnung ermöglicht werden.

Im Normalfall wird die Umfangsgeschwindigkeit der Gruppen von Filtersegmenten auf den verwendeten Trommeln gemäß den Figuren 8 und 9 gleich gehalten. Hierdurch entstehen keine Geschwindigkeitssprünge an den Übergabestellen. Es kann allerdings sein, dass die Anordnung der Trommeln 66 und 80 in Maschinen der Tabak verarbeitenden Industrie Restriktionen vorsehen, beispielsweise durch einen fest vorgegebenen Achsabstand zwischen der zuführenden Trommel 66 und abführenden Trommel 80, die dafür sorgen, dass ein Geschwindigkeitsunterschied notwendig ist.

Insbesondere wenn eine Teilungsänderung notwendig wird, d.h. beispielsweise wenn die Bogenlänge des Abstandes zweier Mulden der ersten Trommel 176 und/oder der zweiten Trommel 177 unterschiedlich zu denen der zufördernden bzw. abfördernden Trommel ist, kann es dadurch zu Geschwindigkeitsänderungen kommen. Bei der Übergabe bzw. Übernahme von Gruppen von Filtersegmenten von der Staffeltrommel 66 bzw. zu der Trommel 80 zur Erzielung einer gegenüberliegenden Muldenanordnung bei der Übernahme bzw. Übergabe von Gruppen von Filtersegmenten kann sich so die Umfangsgeschwindigkeit einer der oder beider Trommeln 176 bzw. 177 zu der Umfangsgeschwindigkeit der Trommeln 66 bzw. 80 unterscheiden.

In dem Ausführungsbeispiel gemäß Fig. 9 kann es sein, dass die zweite Trommel 177 eine andere Umfangsgeschwindigkeit hat als die Spreiztrommel 66 bzw. die Trommel 80. Aufgrund der möglicherweise auftretenden Restriktionen durch beispielsweise fest vorgegebene Achsabstände kann es nun sein, dass die erste Trommel 176 und/oder die zweite Trommel 177 aufgrund der Umlaufweglänge der zu übergebenden Filtersegmentgruppen die Teilung bzw. die Anzahl der Mulden geändert haben.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 1: Strangbildevorrichtung
- 2: Gruppenbildevorrichtung
- 3: Abfördervorrichtung
- 5, 6: Übergabetrommel
- 7: Beschleunigertrommel
- 8: Übergabetrommel
- 9: Abnehmertrommel
- 10: Doppelübergabetrommel
- 11: Filtersegmentgruppenstrom
- 12a, 12b: Filtersegmentgruppenteilstrom
- 13a, 13b: Filtersegmentgruppe
- 14a, 14b: Filterstrang
- 15a, 15b: umhüllter Filterstrang
- 16a, 16b: Multisegmentfilter
- 17a, 17b, 17c, 17d: Filtersegment
- 18: Umhüllungsmaterialstreifen
- 19: Übergabevorrichtung
- 20: Messtrommel
- 21: Ausschleustrommel
- 22: Abgabetrommel
- 23: Längsachse
- 24: Förderrichtung
- 28, 28': Einlegerad
- 30: Bobinenhalterung
- 32: Beleimungsvorrichtung
- 33: Leimvorratsbehälter
- 37: Beleimungsvorrichtung
- 38: Vorratsbehälter
- 44: Formatkammer
- 48: Schneidvorrichtung
- 50: Strangabschneider
- 53: Weichelementvorratsbehälter
- 54: Hartelementvorratsbehälter
- 56: Müllbehälter
- 58: Energieversorgungseinheit
- 60: Konversionseinheit
- 61: Hartelementeinheit
- 62: Übergabeeinheit
- 63.1, 63.2,:
- 63.3, 63.4, 63.5: Übergabetrommel
- 64, 64.1: Zusammenstelltrommel
- 65: Weichelementeinheit
- 66: Spreiztrommel
- 67: Inversstaffeltrommel
- 70: Trommelschlitten
- 71: Führungsschiene
- 72: Mulde
- 73a, 73b: Schwenkarm
- 74: Saugluftöffnung
- 75: Inversstaffeltrommel
- 76: 1. Trommelkörper
- 77: 2. Trommelkörper
- 78: 1. Mulde
- 79: 2. Mulde
- 80: Trommel
- 81: 1. Drehachse
- 82: 2. Drehachse
- 83: Förderrichtung
- 175: Stafffelvorrichtung
- 176: erste Trommel
- 177: zweite Trommel
- 181: erste Drehachse
- 182: zweite Drehachse
- 183: belegte Mulden
- 184: belegte Mulden
- 185: belegte Mulden
- 186: belegte Mulden
- 188: Förderrichtung

## Patentansprüche

1. Verfahren zum Herstellen von Multisegmentfiltern (16a, 16b) der Tabak verarbeitenden Industrie, wobei zunächst ein Strom (11) von queraxial geförderten Gruppen (13a, 13b) von Filtersegmenten (17a, 17b, 17c, 17d) zur Verfügung gestellt wird, wobei die Filtersegmente (17a - 17d) einer Gruppe (13a, 13b) längsaxial nebeneinander angeordnet sind, wobei ein erster und ein zweiter Teilstrom (12a, 12b) von queraxial geförderten Gruppen (13a, 13b) von Filter-segmenten (17a - 17d) gebildet wird, wobei anschließend die Gruppen (13a) von Filtersegmenten (17a - 17d) des ersten Teilstroms (12a) in einen ersten längsaxial geförderten Filterstrang (14a, 15a) übergeben werden und die Gruppen (13b) von Filtersegmenten (17a - 17d) des zweiten Teilstroms (12b) in einen zweiten längsaxial geförderten Filterstrang (14b, 15b) übergeben werden, **dadurch gekennzeichnet, dass** zur Bildung des ersten und zweiten Teilstroms (12a, 12b) wenigstens jede zweite Gruppe (13a, 13b) von Filtersegmenten (17a - 17b) bei der queraxialen Förderung längsaxial verschoben wird.

2. Verfahren nach Anspruch 1, **dadurch gekennzeichnet, dass** beim Schritt des längsaxialen Verschiebens wenigstens jeder zweiten Gruppe (13a, 13b) von Filtersegmenten (17a - 17d) diese so weit verschoben werden, dass die jeweilige zweite Gruppe (13b) von Filtersegmenten (17a - 17d) vollständig von der jeweiligen ersten Gruppe (13a) abgespreizt wird.

3. Verfahren nach Anspruch 1 oder 2, **dadurch gekennzeichnet, dass** zwischen dem Schritt des längsaxialen Verschiebens wenigstens jeder zweiten Gruppe (13b) von Filtersegmenten (17a - 17b) und dem Schritt der Übergabe in den ersten und zweiten Filterstrang (14a, 14b, 15a, 15b) je zwei benachbarte Gruppen (13a, 13b) von Filtersegmenten (17a - 17d) längsaxial fluchtend angeordnet werden.

4. Verfahren nach Anspruch 3 **dadurch gekennzeichnet, dass** zum längsaxial fluchtenden Anordnen die Gruppen (13a) von Filtersegmenten (17a - 17d) des ersten Teilstroms (12a) nach vorne in Förderrichtung (24) verschwenkt werden und die Gruppen (13b) von Filtersegmenten (17a - 17d) des zweiten Teilstroms (12b) nach hinten entgegen der Förderrichtung (24) verschwenkt werden.

5. Verfahren nach Anspruch 3, **dadurch gekennzeichnet, dass** zum längsaxial fluchtenden Anordnen die Gruppen (13a) von Filtersegmenten (17a - 17d) des ersten Teilstroms (12a) auf einer versetzten Förderbahn gegenüber der Förderbahn des zweiten Teilstroms (12b) gefördert werden.

6. Verfahren nach Anspruch 5, **dadurch gekennzeichnet, dass** die Förderbahnen Kreisbahnen sind, wobei die Mittelpunkte der Kreisbahnen zueinander, insbesondere um einen halben Abstand der gestaffelten Gruppen (13a, 13b) von Filtersegmenten (17a - 17d), versetzt sind.

7. Verfahren nach einem der Ansprüche 1 bis 6, **dadurch gekennzeichnet, dass** der erste und der zweite längsaxial geförderte Filterstrang (14a, 14b, 15a, 15b) jeweils mit einem Umhüllungsmaterial (18) umhüllt werden.

8. Fördervorrichtung (60) zur Übergabe von Gruppen (13a, 13b) von Filtersegmenten (17a - 17d) bei der Herstellung von Multisegmentfiltern (16a, 16b) der Tabak verarbeitenden Industrie, umfassend eine Spreiztrommel (66), die bewegbare Organe (70) aufweist, wobei die Organe (70) jeweils wenigstens eine Mulde (72) zur Aufnahme einer Gruppe (13a, 13b) von Filtersegmenten (17a, 17b) aufweisen und wobei die Organe (70) längsaxial zu der Längsachse der jeweiligen Mulde (72) verschiebbar sind, **dadurch gekennzeichnet, dass** außerdem eine Staffelvorrichtung (67, 75) vorgesehen ist, die Mulden (72, 78, 79) zur Aufnahme einer Gruppe (13a, 13b) von Filtersegmenten (17a - 17d) aufweist, wobei Gruppen (13a, 13b) von Filtersegmenten (17a - 17d) aus Mulden (72) der Spreiztrommel (66) auf Mulden (72, 78, 79) der Staffelvorrichtung (67, 75) übergebbar sind und, wobei die Mulden (72, 78, 79) der Staffelvorrichtung (67, 75) eine Bewegung ausführen, so dass zwei Gruppen (13a, 13b) von Filtersegmenten (17a - 17d) aus einer gestaffelten Anordnung in eine längsaxial fluchtende Anordnung überführbar sind.

9. Fördervorrichtung (60) nach Anspruch 8, **dadurch gekennzeichnet, dass** die beweglichen Organe (70) der Spreiztrommel (66) Schlitten sind.

10. Fördervorrichtung (60) nach Anspruch 8 oder 9, **dadurch gekennzeichnet, dass** die Staffelvorrichtung als Staffeltrommel (67) ausgebildet ist, wobei die Staffeltrommel (67) zwei Reihen verschwenkbarer Arme (73a, 73b) aufweist, in denen jeweils die Mulden (72) vorgesehen sind, wobei, insbesondere längsaxial, benachbarte Arme (73a, 73b) der Staffeltrommel (67) so bewegbar sind, dass zwei Gruppen (13a, 13b) von Filtersegmenten (17a - 17d) aus einer gestaffelten Anordnung in eine längsaxial fluchtende Anordnung überführbar sind.

11. Fördervorrichtung (60) nach Anspruch 10, **dadurch gekennzeichnet, dass** benachbarte Arme (73a, 73b) der zwei Reihen gegeneinander verschwenkt werden, um eine längsaxial fluchtende Anordnung der jeweiligen Mulden (72) der benachbarten Arme (73a, 73b) zu erzielen.

12. Fördervorrichtung (60) nach Anspruch 8 oder 9, **dadurch gekennzeichnet, dass** die Staffelvorrichtung als Staffeltrommel (75) ausgebildet ist, wobei die Staffeltrommel (75) zwei Trommelkörper (76, 77) jeweils mit parallel zueinander angeordneten Mulden (78, 79) aufweist, wobei die Rotationsachsen (81, 82) der Trommelkörper (76, 77) parallel zueinander versetzt sind.

13. Selbstständige Funktionseinheit einer Maschine zur Herstellung von Multisegmentfiltern (16a, 16b) der Tabak verarbeitenden Industrie in einem Doppelstrangverfahren, wobei diese eine Filtersegmentzusammenstellvorrichtung (2), die Gruppen (13a, 13b) von Filtersegmenten (17a - 17d) zusammenstellt und queraxial fördert, mit einer Doppelstrangmaschine (1) oder einer Übergabevorrichtung (62) zu einer Doppelstrangmaschine (1) verbindet und wobei die selbstständige Funktionseinheit eine Fördervorrichtung (60) nach einem der Ansprüche 8 bis 12 aufweist.

14. Multisegmentfilterherstellmaschine mit einer Filtersegmentzusammenstellvorrichtung (2), die Gruppen (13a, 13b) von Filtersegmenten (17a - 17d) zusammenstellt und queraxial fördert, einer Fördervorrichtung (60) nach einem der Ansprüche 8 bis 12 oder einer selbstständigen Funktionseinheit nach Anspruch 13 und einer Doppelstrangmaschine (1), die längsaxial zwei Filterstränge (14a, 14b, 15a, 15b) bildet und fördert, aus denen Multisegmentfilter (16a, 16b) ablängbar sind.

## Claims

1. Process for producing multi-segment filters (16a, 16b) in the tobacco-processing industry, wherein first of all a stream (11) of groups (13a, 13b), conveyed transversely to the axis, of filter segments (17a, 17b, 17c, 17d) is provided, wherein the filter segments (17a - 17d) of a group (13a, 13b) are arranged next to one another longitudinally to the axis, wherein a first and a second part-stream (12a, 12b) of groups (13a, 13b), conveyed transversely to the axis, of filter segments (17a - 17d) is formed, wherein following this the groups (13a) of filter segments (17a - 17d) of the first part-stream (12a) are delivered into a first filter strand (14a, 15a) conveyed longitudinally to the axis, and the groups (13b) of filter segments (17a - 17d) of the second part-stream (12b) are delivered into a second filter strand (14a, 15b) conveyed longitudinally to the axis, **characterised in that** to form the first and second part-stream (12a, 12b), at least every second group (13a, 13b) of filter segments (17a - 17b) is moved, on conveying transversely to the axis, longitudinally to the axis.

2. Process according to claim 1, **characterised in that** in the step of moving, longitudinally to the axis, at least every second group (13a, 13b) of filter segments (17a - 17d), these are moved to such an extent that the respective second group (13b) of filter segments (17a - 17d) is completely spread by the respective first group (13a).

3. Process according to claim 1 or 2, **characterised in that** between the step of moving, longitudinally to the axis, at least every second group (13b) of filter segments (17a - 17b) and the step of delivery into the first and second filter strand (14a, 14b, 15a, 15b), two adjacent groups (13a, 13b) each of filter segments (17a - 17d) are arranged in alignment longitudinally to the axis.

4. Process according to claim 3, **characterised in that** for arranging in alignment longitudinally to the axis, the groups (13a) of filter segments (17a - 17d) of the first part-stream (12a) are pivoted forwards in the conveying direction (24) and the groups (13b) of filter segments (17a - 17d) of the second part-stream (12b) are pivoted backwards against the conveying direction (24).

5. Process according to claim 3, **characterised in that** for arranging in alignment longitudinally to the axis, the groups (13a) of filter segments (17a - 17d) of the first part-stream (12a) are conveyed on an offset conveyor with regard to the conveyor of the second part-stream (12b).

6. Process according to claim 5, **characterised in that** the conveyors are circuits, wherein the central points of the circuits are offset to one another, in particular by half the distance of the staggered groups (13a, 13b) of filter segments (17a - 17d).

7. Process according to one of claims 1 to 6, **characterised in that** the first and the second filter strand (14a, 14b, 15a, 15b) conveyed longitudinally to the axis are each wrapped with a wrapping material (18).

8. Conveying device (60) for delivering groups (13a, 13b) of filter segments (17a - 17d) in the production of multi-segment filters (16a, 16b) in the tobacco-processing industry, comprising a separating drum (66) which has movable elements (70), wherein the elements (70) in each case have at least one trough (72) to accommodate a group (13a, 13b) of filter segments (17a, 17b), and wherein the elements (70) can be moved, longitudinally to the axis, to the longitudinal axis of the respective trough (72), **characterised in that** in addition a staggering device (67, 75) is provided which has troughs (72, 78, 79) to accommodate a group (13a, 13b) of filter segments (17a - 17d), wherein groups (13a, 13b) of filter segments (17a - 17d) of troughs (72) of the separating drum (66) can be delivered to troughs (72, 78, 79) of the staggering device (67, 75), and wherein the troughs (72, 78, 79) of the staggering device (67, 75) execute a movement so that two groups (13a, 13b) of filter segments (17a - 17d) can be transferred from a staggered arrangement into an arrangement in alignment longitudinally to the axis.

9. Conveying device (60) according to claim 8, **characterised in that** the movable elements (70) of the separating drum (66) are slides.

10. Conveying device (60) according to claim 8 or 9, **characterised in that** the staggering device is developed as a separating drum (67), wherein the staggering drum (67) has two series of pivotable arms (73a, 73b) in which in each case the troughs (72) are provided, wherein in particular adjacent arms longitudinal to the axis (73a, 73b) of the staggering drum (67) are movable such that two groups (13a, 13b) of filter segments (17a - 17d) can be delivered from a staggered arrangement into an arrangement aligned longitudinally to the axis.

11. Conveying device (60) according to claim 10, **characterised in that** adjacent arms (73a, 73b) of the two series are pivoted against one another in order to achieve an arrangement, in alignment longitudinal to the axis, of the respective troughs (72) of the adjacent arms (73a, 73b).

12. Conveying device (60) according to claim 8 or 9, **characterised in that** the staggering device is developed as a staggering drum (75), wherein the staggering drum (75) has two drum bodies (76, 77), in each case with troughs (78, 79) arranged parallel to one another, wherein the axes of rotation (81, 82) of the drum bodies (76, 77) are offset parallel to one another.

13. Independent functional unit of a machine for the production of multi-segment filters (16a, 16b) in the tobacco-processing industry in a double-strand process, wherein this connects a filter segment assembly device (2) which assembles groups (13a, 13b) of filter segments (17a - 17d) and conveys them transversely to the axis, to a double-strand machine (1) or a delivery device (62) to a double-strand machine (1), and wherein the independent functional unit has a conveying device (60) according to one of claims 8 to 12.

14. Multi-segment filter production machine with a filter segment assembly device (2) which assembles groups (13a, 13b) of filter segments (17a - 17d) and conveys them transversely to the axis, a conveying device (60) according to one of claims 8 to 12 or an independent functional unit according to claim 13 and a double-strand machine (1) which forms and conveys, longitudinally to the axis, two filter strands (14a, 14b, 15a, 15b) from which multi-segment filters (16a, 16b) can be cut to length.

## Revendications

1. Procédé de fabrication de filtres à plusieurs segments (16a, 16b) de l'industrie de transformation du tabac, dans lequel d'abord un flux (11) de groupes (13a, 13b), transportés transversalement par rapport à leur axe, de segments de filtre (17a, 17b, 17c, 17d), est mis à disposition, les segments de filtre (17a - 17d) d'un groupe (13a, 13b) étant disposés les uns à côté des autres longitudinalement par rapport à leur axe, un premier et un deuxième flux partiels (12a, 12b) de groupes (13a, 13b), transportés transversalement par rapport à leur axe, de segments de filtre (17a - 17d), étant formés, les groupes (13a) de segments de filtre (17a - 17d) du premier flux partiel (12a) étant ensuite délivrés dans un premier boudin de filtre (14a, 15a), transporté longitudinalement par rapport à son axe, et les groupes (13b) de segments de filtre (17a - 17d) du deuxième flux partiel (12b) étant délivrés dans un deuxième boudin de filtre (14b, 15b), transporté longitudinalement par rapport à son axe, **caractérisé en ce que**, pour la formation du premier et du deuxième flux partiels (12a, 12b), au moins un groupe sur deux (13a, 13b) de segments de filtre (17a - 17d) est décalé longitudinalement par rapport à leur axe lors du transport transversal à leur axe.

2. Procédé selon la revendication 1, **caractérisé en ce que**, lors de l'étape de décalage longitudinal par rapport à leur axe, au moins un groupe sur deux (13a, 13b) de segments de filtre (17a - 17d) va déplacer ces derniers de façon que, dans chaque cas, le deuxième groupe (13b) de segments de filtre (17a - 17d) soit entièrement écarté du premier groupe (13a) correspondant.

3. Procédé selon la revendication 1 ou 2, **caractérisé en ce que**, entre l'étape de déplacement longitudinal par rapport à leur axe d'au moins un groupe sur deux (13b) de segments de filtre (17a - 17b) et l'étape de délivrance dans le premier et le deuxième boudins de filtre (14a, 14b, 15a, 15b), deux groupes voisins (13a, 13b) de segments de filtre (17a- 17d) vont être disposés en alignement longitudinal par rapport à leur axe.

4. Procédé selon la revendication 3, **caractérisé en ce que**, pour permettre la disposition en alignement longitudinal par rapport à leur axe, les groupes (13a) de segments de filtre (17a - 17d) du premier flux partiel (12a) sont basculés vers l'avant dans la direction du transport (24), et les groupes (13b) de segments de filtre (17a - 17d) du deuxième flux partiel (12b) sont basculés vers l'arrière, dans la direction opposée à la direction du transport (24).

5. Procédé selon la revendication 3, **caractérisé en ce que**, pour permettre la disposition en alignement longitudinalement par rapport à leur axe, les groupes (13a) de segments de filtre (17a - 17d) du premier flux partiel (12a) sont transportés sur une trajectoire décalée par rapport à la trajectoire du deuxième flux partiel (12b).

6. Procédé selon la revendication 5, **caractérisé en ce que** les trajectoires sont des trajectoires circulaires, les centres des trajectoires circulaires étant décalés l'un par rapport à l'autre, en particulier de la moitié de la distance des groupes échelonnés (13a, 13b) de segments de filtre (17a - 17d).

7. Procédé selon l'une des revendications 1 à 6, **caractérisé en ce que** le premier et le deuxième boudins de filtre (14a, 14b, 15a, 15b), transportés longitudinalement par rapport à leur axe, sont chacun gainés d'un matériau de gainage (18).

8. Dispositif de transport (60) pour délivrer des groupes (13a, 13b) de segments de filtre (17a - 17d) lors de la fabrication de filtres à plusieurs segments (16a, 16b) de l'industrie de transformation du tabac, comprenant un tambour écarteur (66), qui comprend des organes mobiles (70), chacun des organes (70) présentant au moins une cavité (72) destinée à loger un groupe (13a, 13b) de segments de filtre (17a - 17b), et les organes (70) pouvant être déplacés longitudinalement par rapport à leur axe, par rapport à l'axe longitudinal de la cavité considérée (72), **caractérisé en ce que** l'on prévoit en outre un dispositif d'échelonnement (67, 75), qui présente des cavités (72, 78, 79) destinées à loger un groupe (13a, 13b) de segments de filtre (17a - 17d), les groupes (13a, 13b) de segments de filtre (17a - 17d) pouvant être transférés, de cavités (72) du tambour écarteur (66), à des cavités (72, 78, 79) du dispositif d'échelonnement (67, 75), les cavités (72, 78, 79) du dispositif d'échelonnement (67, 75) effectuant un mouvement de telle sorte que deux groupes (13a, 13b) de segments de filtre (17a - 17d) puissent, à partir d'une disposition échelonnée, être transposés dans une disposition en alignement longitudinal par rapport à leur axe.

9. Dispositif de transport (60) selon la revendication 8, **caractérisé en ce que** les organes mobiles (70) du tambour écarteur (66) sont des coulisseaux.

10. Dispositif de transport (60) selon la revendication 8 ou 9, **caractérisé en ce que** le dispositif d'échelonnement est configuré comme un tambour d'échelonnement (67), le tambour d'échelonnement (67) présentant deux rangées de bras pivotants (73a, 73b), dans chacun desquels sont prévues des cavités (72), en particulier les bras (73a, 73b) voisins, longitudinaux par rapport à leur axe, du tambour d'échelonnement (67), étant mobiles de telle sorte que deux groupes (13a, 13b) de segments de filtre (17a - 17d) puissent être transposés, à partir d'une disposition échelonnée, dans une disposition en alignement longitudinal par rapport à leur axe.

11. Dispositif de transport (60) selon la revendication 10, **caractérisé en ce que** les bras voisins (73a, 73b) des deux rangées sont pivotés l'un par rapport à l'autre, pour réaliser une disposition en alignement longitudinal par rapport à leur axe, des cavités (72) correspondantes des bras voisins (73a, 73b).

12. Dispositif de transport (60) selon la revendication 8 ou 9, **caractérisé en ce que** le dispositif d'échelonnement est configuré comme un tambour d'échelonnement (75), le tambour d'échelonnement (75) présentant deux corps de tambour (76, 77), chacun ayant des cavités (78, 79) disposées parallèlement l'une à l'autre, les axes de rotation (81, 82) des corps de tambour (76, 77) étant décalés parallèlement l'un à l'autre.

13. Unité fonctionnelle autonome d'une machine de fabrication de filtres à plusieurs segments (16a, 16b) de l'industrie de transformation du tabac dans un procédé de confection à deux boudins, cette machine reliant un dispositif (2) de regroupement des segments de filtre, qui regroupe les groupes (13a, 13b) de segments de filtre (17a - 17d) et les transporte transversalement à leur axe, à une confectionneuse à deux boudins (1) ou à un dispositif (62) de délivrance à une confectionneuse à deux boudins (1), l'unité fonctionnelle autonome comportant un dispositif de transport (60) selon l'une des revendications 8 à 12.

14. Machine de fabrication de filtres à plusieurs segments, comportant un dispositif (2) de regroupement des segments de filtre, qui regroupe les groupes (13a, 13b) de segments de filtre (17a - 17d) et les transporte transversalement par rapport à leur axe, un dispositif de transport (60) selon l'une des revendications 8 à 12 ou une unité fonctionnelle autonome selon la revendication 13 et une confectionneuse à deux boudins (1), qui forme et transporte deux boudins de filtre (14a, 14b, 15a, 15b) longitudinalement par rapport à leur axe, à partir desquels des filtres à plusieurs segments (16a, 16b) peuvent être découpés à la longueur.
